# EUROPÄISCHE PATENTSCHRIFT

(11) **EP 0 334 094 B1**
(45) Veröffentlichungstag und Bekanntmachung des Hinweises auf die Patenterteilung: **29.09.1993**
(21) Anmeldenummer: 89103955.4
(22) Anmeldetag: 07.03.1989
(51) Int. Cl.: B29C 45/14, B29C 45/26, B65D 5/02

(54) **Vorrichtung zum Anspritzen eines Kunststoffteiles an einen Papiertubus unter Verwendung eines Abstützteiles**
Device for injection of a plastic part onto a paper tube by means of a supporting piece
Dispositif d'injection d'une partie en matière synthétique sur un tube en papier au moyen d'une pièce de support

(30) Priorität: 19.03.1988 DE 3809275
(43) Veröffentlichungstag der Anmeldung: 27.09.1989
(73) Patentinhaber: Tetra Laval Holdings & Finance SA, 1009 Pully (CH)
(72) Erfinder: Reil, Wilhelm, D-6142 Bensheim 1 (DE)
(74) Vertreter: Weber, Dieter, Dr.

(56) Entgegenhaltungen:
- GB-A- 2 171 048
- JP-A- 6 058 821
- JP-A- 6 058 822
- PATENT ABSTRACTS OF JAPAN, Band 7, Nr. 110 (M-214)[1255], 13. Mai 1983; & JP-A-58 29 618 (DAINIPPON INSATSU K.K.) 21-02-1983
- PATENT ABSTRACTS OF JAPAN, Band 8, Nr. 140 (M-305)[1577], 29. Juni 1984; & JP-A-59 38 038 (DAINIPPON INSATSU K.K.) 01-03-1984

## Beschreibung

Die Erfindung betrifft eine Vorrichtung zum Anspritzen eines Kunststoffteiles an einen mit Kunststoff beschichteten Papiertubus einer Flüssigkeitspackung, mit einem Spritzkern und einer diesen umgreifenden Außenform, wobei an der Randfläche neben einer geraden Außenkante des Spritzkerns ein Abstützteil herausstehend angebracht ist, an welchem der Papiertubusrand in Anlage bringbar ist.

Derartige Spritzvorrichtungen sind bereits bekannt und werden im folgenden in Verbindung mit einer Packungsmaschine beschrieben, bei welcher beidseitig mit Kunststoff beschichtetes Papier in Bahnform von einer Rolle abgezogen, vereinzelt und zu einem im Querschnitt runden Papiertubus über eine Längssiegelnaht geformt wird, der auf einen ebenfalls im Querschnitt runden Dorn als Spritzkem aufgeschoben wird und mit seinem Rand in der Spritzposition im Formraum des Werkzeuges (Spritzkern und Außenform) derart endet, daß der erhitzte, flüssige Kunststoff in den Formraum strömt und die runde Stirnkante des Papiertubus vollständig abschließend umgreift. Dadurch wird die Papierhülse in der bekannten Maschine auf einer Seite durch den Deckel verschlossen, denn der Deckel besteht aus Kunststoff ohne Trägermaterial und weist beispielsweise auch zugleich die Ausgießöffnung auf. Der Deckel ist an der Stirnkante der Papierhülse verankert, stützt sich an dieser ab und dichtet gleichzeitig auch die offene Schnittfläche dieser Stirnkante ab. Schneidet man nämlich eine beidseitig mit Kunststoff beschichtete Papierbahn, dann entsteht längs der Schnittkante, die nach Bildung der Hülse die kreisförmige Stirnkante wird, eine ohne Kunststoff beschichtete, ungeschützte Kante, die gegen Eintritt von Flüssigkeit geschützt werden muß, weil anderenfalls die Flüssigkeit in die Papierfasern zwischen die Kunststoffschichten eindringt und die Packung von dieser Schnittkante aus zerstört. Die bekannte Spritzmaschine weist daher einen solchen Formraum auf, daß die obere runde Stirnkante der Papierhülse nicht am Rand des Formraumes sondern im Inneren desselben mündet mit der Folge, daß der später den Formraum vollständig ausfüllende Kunststoff sich nicht nur auf die freie Stirnkante, welche die Schnittfläche war, sondern auch beidseitig neben diese anlegt und damit den oberen Rand des Papiertubus flüssigkeitsdicht abschließt.

Die Verpackungsmaschine zur Erstellung von im Querschnitt wenigstens teilweise runden Flüssigkeitspackungen arbeitete auf diese Weise zufriedenstellend. Man ist nun aber dazu übergegangen, auch Flüssigkeitspackungen mit viereckigem Querschnitt mit der gleichen Spritztechnik herzustellen. Der Unterschied zu der runden Packung besteht für das Werkzeug nur darin, daß auch der Dorn durch Bildung von vier Außenebenen im Querschnitt viereckig wird und die entsprechend gestaltete Papierhülse in eine vergleichbare Position auf diesen quaderförmigen Dorn aufgeschoben wird. Im übrigen glaubte man, daß sich keinerlei Veränderungen bei der Spritztechnik ergeben.

Nun mußte man aber feststellen, daß die ebene Seitenwandung der viereckigen Flüssigkeitspackung am Ansatz des Deckels undichte Stellen hatte. Zunächst konnte man wegen der sorgfältig hergestellten Werkzeugteile, insbesondere der Endbereiche des Spritzkerns und auch der Außenform, Fehlerquellen für die undichten Stellen nicht entdecken; bis man im Bereich des ebenen Randes des Papiertubus im Abstand von den vier Ecken teilweise Spritzwulste außen und Verdünnungen auf der Innenseite der Flüssigkeitspackung feststellte. Untersuchungen ergaben dann, daß sich die eine oder andere ebene Seitenwandung der Flüssigkeitspackung bzw. der Papierhülse im Bereich des oberen Randes nicht exakt an die ebene Wand der Außenform angelegt hatte.

Zwar hatte man bei einem ähnlichen Problem bei der JP-A-6 058 821 und Patent Abstracts of Japan, Band 9, Nr. 194 (M-403) [1917], 10. August 1985 an einer Stelle den Außenrand eines ähnlichen Spritzkerns mit einem Abstützteil so ausgestattet, daß die im Querschnitt in Form eines geschlossenen U ausgestattete Seitenwand der bekannten Packung zwischen Spritzkern und Außenform so eingelegt werden konnte, daß auch an der ebenen Wandung oben, ein Kunststoffrand an den Tubusrand angespritzt werden konnte. Das bekannte Abstützteil verhinderte ähnlich wie vorstehend beschrieben ein Hereinklappen der Wandung unter Ablösen von der Außenform. Bei dieser bekannten Vorrichtung ragte aber die abstützende Wandung der Außenform über die Tubuswandung nach oben in den Spritzformraum hinein, so daß beim Spritzvorgang nicht annähernd vergleichbar starke Kräfte von außen auf den Papiertubusrand einwirken und diesen nach unten durchbiegen konnten. Der bekannte Papiertubusrand konnte folglich nicht mit einem einwandfreien Kantenschutz versehen werden. Außerdem handelt es sich im bekannten Fall um eine oben offene Packung, die nicht durch einen Deckel unter Anspritzen an den besagten Tubusendrand verschlossen wird. Würde zusammen mit dem Kantenschutz ein am Tubusendrand angeschlossener Deckel angespritzt, dann wäre die bekannte Packung nicht mehr entformbar.

Beim Entformen müssen ferner bei der bekannten Packung die Wandungen verbogen werden, weil man anders den bekannten Spritzkem aus dem mit dem neu angespritzten Rand versehenen Becher nicht herausziehen kann. Es gibt aber bei dem bekannten Becher nur eine flache Wandung und auch nur ein Abstützteil, so daß sich der ebene oder flache Bereich der Wandung Im Verhältnis zu den anderen Seitenwänden beim Entformen verbiegen kann.

Der Erfindung liegt die Aufgabe zugrunde, die Anspritzvorrichtung der eingangs bezeichneten Art dahingehend zu verbessern, daß sich bei im Querschnitt viereckigem Papiertubus die ebenen Wandungen des Tubus nicht durchbiegen, die Anspritzstelle überall zuverlässig eingestellt und ein gutes Entformen möglich ist.

Während bei der im Querschnitt runden Flüssigkeitspackung mit der runden Papierhülse ausreichende Abstützkräfte durch das Papiermaterial und seine runde Ausgestaltung vorhanden waren, so daß sich der obere Rand der Papierhülse gut an die zylindermantelförmige Wandung der Außenform anlegte und auch der einfließende, erhitzte Kunststoff diesen oberen Rand nicht von der Formwandung wegzudrücken vermochte, hat man bei den erfindungsgemäßen Untersuchungen festgestellt, daß derartige Versteifungs- und Haltekräfte im oberen Rand des Papiertubus durch seine ebene Ausgestaltung zwischen den Ecken verloren gehen. Tatsächlich hat man dann festgestellt, daß sich die ebenen Wandungen im Bereich des oberen Randes beim Spritzvorgang beliebig und zufällig in den Formraum dort hinbewegen bzw. verbiegen, so sich zunächst freies Volumen befindet, welches durch den einfließenden Kunststoff erst ausgefüllt wird. Betrachtet man beispielsweise die Mitte eines ebenen oberen Randes der Papierhülse, dann kann man sich ein Durchbiegen dieses ebenen Randes von der Wandung der Außenform weg nach innen zum Spritzkern hin vorstellen mit dem Ergebnis, daß zwischen Wandung der Außenform und Außenfläche des oberen ebenen Randes des Papiertubus Kunststoff einfließt und den oben beschriebenen und zu Anfang festgestellten Kunststoffwulst bildet, wo er nicht nur überflüssig sondern sogar deshalb unerwünscht ist, weil die hier überflüssige Menge Kunststoff auf der gegenüberliegenden Innenseite fehlt und daher zu Undichtigkeiten, wenigstens aber Schwächung der Verankerungskräfte führt, durch welche der Deckel später an der Papierhülse gehalten werden soll. Die kleinste Belastung der gefüllten Flüssigkeitspackung führt dann an dieser Schwachstelle zum Aufbrechen.

Um dieses Durchbiegen der Tubuswandungen auch bei den hier besonders interessierenden Packungen mit geschlossenem Deckel auszuschalten, wird zur Lösung der vorstehenden Aufgabe erfindungsgemäß vorgeschlagen, daß eine Mehrzahl von über den Umfang verteilten Abstützteilen an der oberen Endkante des Spritzkerns angebracht ist, das freie Ende des Papiertubusrandes über seitliche Abstützflächen des Spritzkerns und der Außenform hinaus nach oben derart weit in den Spritzhohlraum hineinragt, daß das Ende des Papiertubusrandes nach innen und außen frei steht und daß der Spritzhohlraum zum Anspritzen des geschlossenen Kunststoffdeckels an den Papiertubusrand, diesen beidseitig unter Bildung des Kantenschutzes umschließend, ausgestaltet ist. Erfindungsgemäß ist der obere ebene Rand des Papiertubus, der nach dem Aufschieben auf den Dorn ein beachtliches Stück weit über die obere Außenkante des Dornes heraussteht, nämlich um in den Formraum hineinzuragen, von außen durch die Wandung der Außenform abgestützt und nunmehr auch von innen erfindungsgemäß durch die Abstützteile. Trotz der ebenen Form der nicht unerheblich großen Seitenwandung der neuen Flüssigkeitspackung bzw. des ebenen Randes des Papiertubus ist mit Vorteil ein Durchbiegen vermieden, so daß die Lage der Stirnfläche des Papiertubus überall zuverlässig eingestellt ist und Schwächungs- oder gar Undichtigkeitsstellen der fertigen Flüssigkeitsverpackung eliminiert sind. Trotz der Abstützteile und des Kantenschutzes am Tubus läßt sich der Formling nach dem Anspritzen einwandfrei vom Werkzeug lösen (entformen).

Zweckmäßig ist es erfindungsgemäß dabei, wenn das Abstützteil die Gestalt eines Plättchens hat, welches einen Teil des Querschnittsprofils zwischen Spritzkern und Außenform einnimmt, und wenn die äußere Endfläche des Abstützteils eben ist und parallel zur Tubuswandung derart liegt, daß sie an den ebenen Rand des Papiertubus anlegbar ist. Die Stirnfläche und auch die Randfläche eines Dornes bzw. Spritzkernes wird teilweise durch spanabhebende Bearbeitung geformt, so daß gerade Kanten und Linien sowohl bei Ausnehmungen wie auch bei Erhebungen an einem solchen Werkstück bevorzugt sind. Die Ausgestaltung des Abstützteils als Plättchen kommt diesem Erfordernis nach und erleichtert daher die Herstellung. Betrachtet man den Formraum zwischen Spritzkern und Außenform, der einerseits den ebenen Rand des Papiertubus und andererseits den eingespritzten Kunststoff aufnimmt, dann füllt das aus der Randfläche vorstehende Abstützteil einen Bruchteil des Querschnittsprofiles dieses Formraumes aus; keinesfalls den gesamten Querschnitt des Formraumes an der Stelle des Abstützteils. Es muß nämlich auch im Bereich des Abstützteiles dafür gesorgt sein, daß die freie Stirnfläche des Papiertubus, welche durch den schnitt jeden Kantenschutz verloren hat, vollständig beim Anspritzen des Deckels mit Kunststoff abgedichtet und umspritzt ist. Das Abstützteil kann aber einen derart großen Teil des Querschnittsprofils des Formraumes einnehmen, daß bei Gewährleistung der genannten Dichtigkeit (Kantenschutz) die Zugkräfte oder Halterungskräfte zwischen oberem Rand des Papiertubus und Deckel fehlen, denn das Abstützteil nimmt nur einen Bruchteil der gesamten Randfläche ein, so daß die benachbarten Flächen ausreichen, um diese nur im Bereich des Abstützteils fehlenden Halterungskräfte auszugleichen bzw. zu übernehmen.

Durch die parallele Anordnung der äußeren Endfläche des Abstützteils zur Tubuswandung bzw. zur Außenebene des Spritzkerns und durch die ebene Ausgestaltung der Endfläche des Abstützteils kann sich der obere Rand des Papiertubus direkt an das Abstützteil anlegen und abgestützt werden, wie der Name sagt.

Günstig ist es ferner, wenn erfindungsgemäß die äußere ebene Endfläche des Abstützteils in die Außenebene des im Querschnitt viereckigen Spritzkerns mündet und bündig zu dieser liegt und in Richtung der geraden Außenkante eine Länge von 1/90 bis 1/20, vorzugsweise 1/70 bis 1/40 der Länge der Außenkante hat. Beträgt die Länge der Außenkante beispielsweise 70 mm, dann genügt bereits eine Länge der ebenen Endfläche des Abstützteils von 1 mm, in Richtung der geraden Außenkante gesehen, um eine wirkungsvolle Abstützung des ebenen Randes des Papiertubus zu gewährleisten. Durch die bündige Anordnung der äußeren ebenen Endfläche des Abstützteils zur Außenebene des Spritzkerns und durch das Einmünden der Endfläche in diese Außenebene kann man den Papiertubus ohne jede Beeinträchtigung auf den Spritzkern schieben oder von diesem herunterziehen, als wenn keine Abstützteile vorgesehen wären.

Es ist vorteilhaft, wenn mehrere Abstützteile in gleicher Höhe an der Randfläche des Spritzkerns befestigt sind, beispielsweise bei einem Spritzkern mit einer Länge der geraden Außenkante von 70 mm drei Abstützteile, deren jeweils äußere ebene Endfläche - in Richtung der geraden Außenkante gesehen - eine Länge von 1 mm hat. Insgesamt ergibt sich damit eine Abstützlänge von 3 mm, welche durch die vorzugsweise gleichmäßige Verteilung über die gerade Außenkante des Spritzkerns ein Durchbiegen des ebenen Randes des Papiertubus mit Sicherheit ausschaltet.

Versuche haben ergeben, daß die Abstützung besonders zweckmäßig dann gelingt, wenn erfindungsgemäß die äußere ebene Endfläche des Abstützteils rechteckig ist und eine Höhe hat, die etwa gleich dem Abstand der geraden Außenkante des Spritzkerns von der ersten Schulter der Außenform ist. Die hier angesprochene erste Schulter der Außenform begrenzt den später mit Kunststoff gefüllten Formraum nach außerhalb und unterhalb des Deckelrandes, wenn man beispielsweise von oben auf den Deckel der fertigen, geschlossenen Flüssigkeitspackung blickt. Die viereckige Stirnfläche ist durch den "radialen" oder auch "horizontalen" Außenflansch des Deckels bedeckt, welcher außen aus Festigkeits- und Dichtigkeitsgründen ein Stück weit über das freie Ende des oberen Randes des Papiertubus hinweggreift und außen auf der Kunststoffschicht des Papiertubus angeschweißt ist.

Wenn nun, wie vorstehend erwähnt, die äußere ebene Endfläche des Abstützteils die besagte Höhe hat, welche etwa auf der Höhe dieser ersten Schulter der Außenform endet, dann ist die vollständige Flüssigkeitsabdichtung der Stirnkante des Papiertubus gewährleistet, wie oben erwähnt, wenngleich die bei Druckbelastungen der gefüllten fertigen Flüssigkeitspackung auftretenden Zugkräfte an dieser Stelle, wo zuvor das Abstützteil gesessen hatte, nicht ausreichen. Die benachbarten Bereiche nehmen aber die notwendigen Zugkräfte auf, wie sich gezeigt hat. Trotz der definierten kleinen Ausnehmungen des Kunststofformlings sitzt dieser (der ja den Deckel der Pakkung bildet) ausreichend fest verankert am Rand des Papiertubus.

Weiterhin ist die Erfindung dadurch vorteilhaft ausgestaltet, daß die jede der vier Außenebenen des Spritzkerns mit seiner Stirnfläche verbindende Randfläche aus wenigstens zwei Teilebenen gebildet ist, die sich längs einer Mittelkante schneiden, und daß das Abstützteil wenigstens aber unteren, zwischen Mittelkante und oberer Außenkante liegenden Teilebene befestigt ist. Die obere Außenkante des Spritzkerns wird hier als "obere" Außenkante bezeichnet, weil man von einem etwa vertikal hochstehenden Dorn bzw. Spritzkern ausgeht und daher die Stirnfläche desselben als "oben" angeordnet annimmt. Die im allgemeinen ebene Stirnfläche, welche die Innenseite des Packungsdeckels bildet, wird also über die genannte Randfläche mit der Außenebene verbunden. Dabei versteht es sich, daß bei einer im Querschnitt viereckigen Packung vier Außenebenen, vorzugsweise unter rechten Winkel zueinander, angestellt sind und so den Papiertubus bilden. Jede Außenebene des Papiertubus und damit auch des Spritzkerns endet zur Stirnfläche hin also in der genannten "geraden, oberen Außenkante". Es ist zwar möglich, die Randfläche zwischen der Außenebene des Spritzkerns und seiner Stirnfläche aus einer oder mehreren Ebenen zu gestalten, die Randfläche könnte aber auch durch gewölbte Flächen und dergleichen gebildet sein, sofern nur der Formraum um den oberen Rand des Papiertubus derart ausgestaltet ist, daß die vorstehend genannten Merkmale und Erfordernisse erfüllt sind, daß also die freie Schnittkante, die obere Stirnkante des Tubus, flüssigkeitsdicht (Kantenschutz) umspritzt ist und bundartige Spritzwulste, vorzugsweise auf der Flüssigkeitspackungsinnenseite angebracht, am Rand des Papiertubus angeschweißt sind, damit auch eine mechanische Halterung des Kunststoffteiles (Deckels der Packung) am Papiertubus (der Papierhülse) gewährleistet ist.

Erfindungsgemäß ist es bevorzugt und herstellungstechnisch zweckmäßig, wenn die Randfläche aus zwei Teilebenen besteht, die streifenförmig parallel zur oberen Außenkante verlaufen, wobei die untere Teilebene zwischen der oberen Außenkante und einer Mittelkante liegt und sich die obere streifenartige Teilebene sich zwischen der Mittelkante und der Stirnflächenkante erstreckt. In Profilrichtung des Abstützteiles gesehen, d.h. in Richtung der oberen Außenkante gesehen, stellen sich die Mittelkante, die obere Außenkante und auch die Stirnflächenkante, die ja alle drei gerade sind, Punkte dar, wobei die Teilebenen durch die Verbindungslinien dieser Punkte dargestellt werden.

Sind diese Verbindungslinien zwischen den die Kanten darstellenden Punkten Geraden, dann sind die Teilflächen der gesamten sogenannten "Randfläche" Ebenen; sind es gekrümmte Linien, dann handelt es sich um die vorstehend erwähnten gekrümmten Flächen. Bevorzugt sind also Ebenen, und hierbei ist es möglich, daß beide Teilebenen wiederum in einer Ebene liegen, welche dann eine ebene Randfläche bilden; bei einer bevorzugten Ausführungsform liegt die Mittelkante aber etwas außerhalb, so daß zwei unter verschiedenem Winkel zueinander angestellte Teilebenen die Randfläche bilden. Die Form der Randfläche des Spritzkerns kann vorzugsweise die Form eines Hausdaches haben, wobei das Abstützteil gemäß der Erfindung wie eine Dachgaube an mindestens einer der zwei Teilebenen angebracht ist. Der Fensterbereich der Gaube entspricht dann der äußeren ebenen Endfläche des Abstützteils, denn diese Fläche liegt parallel und bündig zur Außenebene des Spritzkerns. Die hintere, unter einem Winkel zu dieser ebenen Endfläche des Abstützteils verlaufende und dem Dachbereich der Gaube entsprechende Fläche kann bis zur Stirnflächenkante reichen, kann aber auch im Bereich der oberen Teilebene oder sogar bereits an der Mittelkante enden. Während die äußere Endfläche des Abstützteils eben sein sollte, um dem ebenen Rand des Papiertubus die geeignete Abstützung zu geben, braucht die dem Dachteil der Gaube entsprechende Fläche des Abstützteils nicht eben zu sein. Bis auf die äußere ebene Endfläche des Abstützteils ist dessen Gestaltung im übrigen unkritisch, sofern das Abstützteil ein nicht zu großes Volumen einnimmt, um die erwähnten mechanischen Zug- und Druckkräfte des Kunststoffes nicht zu schwächen, welcher den Deckel mit dem Papiertubus der späteren Flüssigkeitspackung verbindet.

Eine zweckmäßige Ausgestaltung der Abstützteile ist Plättchenform. Beispielsweise kann man in die Randfläche des Spritzkerns und/oder über deren Ränder hinaus durch eine einfache spanende Bewegung (Hobelmaschine) eine Nut derart einbringen, daß ein geeignet geformtes Plättchen eingelegt und festgeschweißt wird. Damit ist das Abstützteil preiswert, exakt und zuverlässig herstellbar und am Spritzkern befestigt. Bei einer anderen Herstellungsmethode könnte man das Abstützteil auch anformen oder alternativ ohne Vorsehen einer Nut im Spritzkern auf die Randfläche aufschweißen.

Weitere Vorteile, Merkmale und Anwendungsmöglichkeiten der vorliegenden Erfindung ergeben sich aus der folgenden Beschreibung bevorzugter Ausführungsformen in Verbindung mit den Zeichnungen. Es zeigen:
- Figur 1: schematisch, perspektivisch und abgebrochen das obere Ende eines Spritzkerns mit einem abgebrochenen Teil des Papiertubusrandes,
- Figur 2: eine vertikale Schnittansicht, schematisch und abgebrochen bei geschlossenem Formraum und eingespritztem Deckel im Bereich des Abstützteils,
- Figur 3: perspektivisch ein das Abstützteil bildendes Plättchen einer speziellen Ausführungsart,
- Figur 4: die Draufsicht auf den Spritzkern, wobei einige Fließkanäle für den Kunststoff und außen einige Abstützteile angedeutet sind,
- Figur 5: die Seitenansicht des Spritzkerns, wenn man Figur 4 von oben nach unten betrachtet, d.h. von der Spitze der Ausgießöffnung her gesehen, und
- Figur 6: eine andere Seitenansicht des oberen Spritzkerns mit eingebrachten Nuten für die plättchenförmigen Abstützteile.

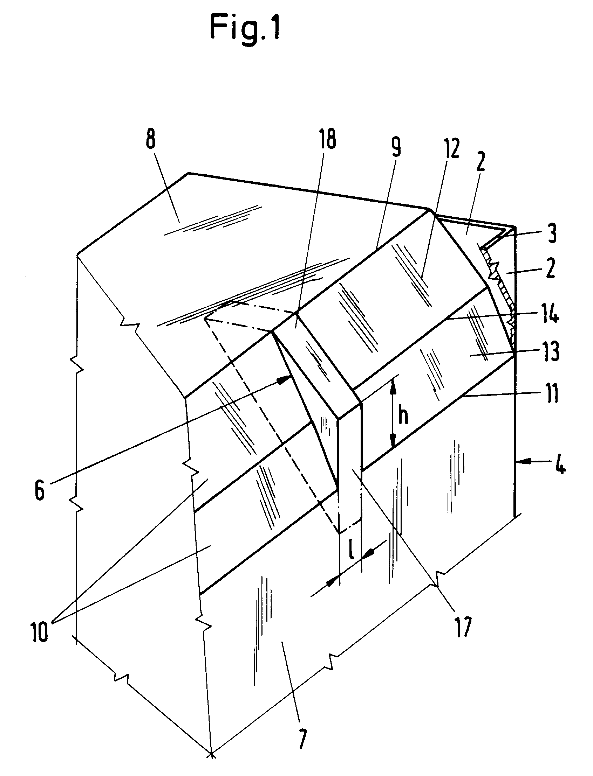

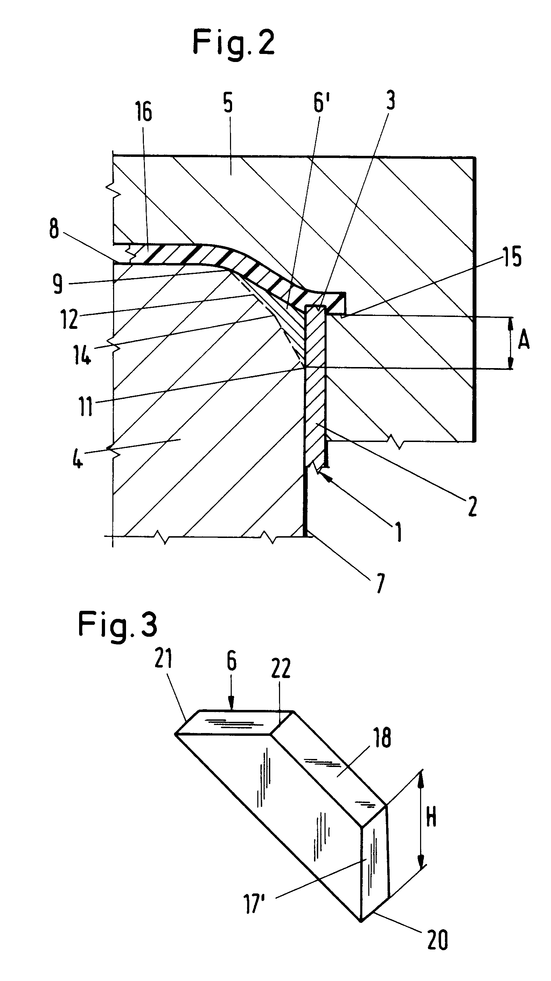

Der Leser kann sich ohne weiteres einen im Querschnitt viereckigen, vorzugsweise quadratischen, Papiertubus vorstellen, dessen rechtes hinteres Ende in Figur 1 perspektivisch und abgebrochen und in Figur 2 in der Schnittansicht bei 1 gezeigt ist, wobei der ebene Rand des Papiertubus in den Figuren 1 und 2 mit 2 bezeichnet ist und das obere Ende des Papiertubus 1 darstellt. In beiden Figuren erkennt man daher auch deutlich die freie obere Stirnkante 3 (ohne Kantenschutz in Figur 1).

Mit 4 ist der im Querschnitt quadratische Dorn bzw. Spritzkern, mit 5 die Außenform und mit 6 das Abstützteil bezeichnet.

Der Spritzkern 4 hat vier Außenebenen, von denen in den Figuren 1 und 2 nur die vordere bzw. rechte Außenebene 7 gezeigt ist. Stirnseitig bzw. "oben" ist der Spritzkern 4 durch die Stirnfläche 8 begrenzt, die an der Stirnkante 9 in die allgemein mit 10 bezeichnete Randfläche übergeht und mit der Außenebene 7 die gerade, obere Außenkante 11 gemeinsam hat. Besteht die Randfläche 10 aus einer oberen (12) Teilebene und einer unteren Teilebene (13), dann schneiden die sich in der Mittelkante 14.

Entsprechende Flächen, Kanten und Ausnehmungen trägt auch die Außenform 5, von der für das Verständnis der Erfindung hier nur in Figur 2 die erste Schulter 15 gezeigt ist, auf deren Höhe eine gestrichelte Linie nach rechts gezogen ist, von der im Abstand A die zweite gestrichelte Linie darunter durch die obere Außenkante 11 gelegt ist. Man erkennt aus Figur 2 auch, daß die durch das Niveau der ersten Schulter 15 gelegte gestrichelte Linie (Figur 2) etwa in Höhe der Mittelkante 14 liegt.

Die vorstehende Beschreibung gibt in etwa die Gestalt des Formraumes zwischen Spritzkern 4 und Außenform 5 an, wobei das beispielsweise den Deckel einer Flüssigkeitspackung bildende Kunststoffteil 16 mit Kreuzschraffur versehen ist, während der ebene Rand des Papiertubus 2 wie auch die Seitenwand des Papiertubus 1 in Figur 2 lediglich eine Einfachschraffur trägt.

Das Abstützteil 6 in Form des Plättchens ist bei einer speziellen Ausführungsform perspektivisch herausgenommen in Figur 3 und eingebaut in Figur 1 gezeigt. Bei diesem Teil 6 kommt es hauptsächlich auf die äußere ebene Endfläche 17 an, deren Fläche durch die Länge 1 (Figur 1) und Höhe h (Figur 1) gegeben ist. Die in Figur 3 gezeigte Fläche 17′ ist größer als die ebene Fläche 17, denn sie verlängert sich um das in den Körper des Spritzkerns hinter der Außenebene 7 eingelassene Teil, so daß die Gesamthöhe der Fläche 17′ mit H bezeichnet ist. Bei entsprechender Ausgestaltung des Abstützteils 6 kann H gleich h oder größer als h sein, sicher jedoch nicht kleiner als h.

Aus Figur 1 sieht man diejenigen Teile des Abstützteils 6, welche aus der Randfläche 10 dachgaubenartig hervorstehen, mit ausgezogenen Linien gezeichnet, während die im Spritzkern 4 eingetauchten Restteile mit gestrichelten Linien angedeutet sind. Die obere Fläche 18 des Abstützteils 6, welche der Dachfläche der Gaube entspricht, ist bei dieser Ausführungsform eben und mündet oben in Richtung der Stirnfläche 8 in der Stirnkante 9.

In der Querschnittsdarstellung der Figur 2 ist das Querschnittsprofil des Abstützteils 6 mit einer einfachen Schraffur angelegt und mit 6′ bezeichnet, wobei die Richtung dieser Einfachschraffur unter einem anderen Winkel steht als die Schraffur des Randes 2 des Papiertubus 1. Aus Figur 2 erkennt man also, welchen Teil im Bereich des Abstützteils 6 die dachgaubenartige Erhebung unter dem Kunststoffdeckel 16 einnimmt. Das Abstützteil hat eine Länge 1 von 1 bis 2 mm, z.B. 2 mm. Nur in diesem Bereich fehlt dem fertigen Kunststoffdekkel 16 der Flüssigkeitspackung das Volumen 6′ welches sich aus der in Figur 2 schraffierten Fläche 6′ multipliziert mit der Länge 1 ergibt. Im Bereich des Abstützteils 6 ergibt sich also ein Querschnittsprofil mit dem Kunststoffteil (Deckel der Flüssigkeitspackung) 16 einerseits und dem oberen Rand 2 des Papiertubus 1 andererseits, wie mit ausgezogenen Linien in Figur 2 zu sehen ist. Im übrigen fehlt dieses Volumen 6′ an Kunststoff nicht sondern trägt zur Ableitung der mechanischen Druck-, Zug- und Haltekräfte bei, so daß der in Figur 2 mit Kreuzschraffur gezeigte Bereich um die Fläche 6′ vergrößert werden müßte. Man erkennt deutlich, wie die Haltekräfte über die gestrichelte Linie in Figur 2 bis zum Punkt 11 geführt werden, der obere Rand 2 des Papiertubus 1 also fest am Kunststoffteil 16 verankert ist.

Während die Größe und Lage der ebenen Fläche 17 des Abstützteils 6, d.h. die Größen 1 (Länge in Richtung der Außenkante 11 gemessen), Höhe h oberhalb der Außenkaten 11 wichtig sind, sind die gestrichelt dargestellten Teile des Abstützteils 6 in Figur 1 veränderlich. So kann beispielsweise die untere vordere Kante 20 des Abstützteils 6 gemäß Figur 3 unter Verkleinerung der Höhe H etwas höher liegen, und auch die hintere untere Kante 21 kann näher an der hinteren oberen Kante 22, welche in der Stirnkante 9 gemäß Darstellung der Figur 1 liegt, herangerückt sein. Gegebenenfalls könnte die Fläche zwischen den Kanten 21 und 22 vollständig entfallen, wenn beispielsweise das Abstützteil 6 wie eine Dachgaube, ohne in die Randfläche 10 einzutauchen, an dieser angeschweißt wird.

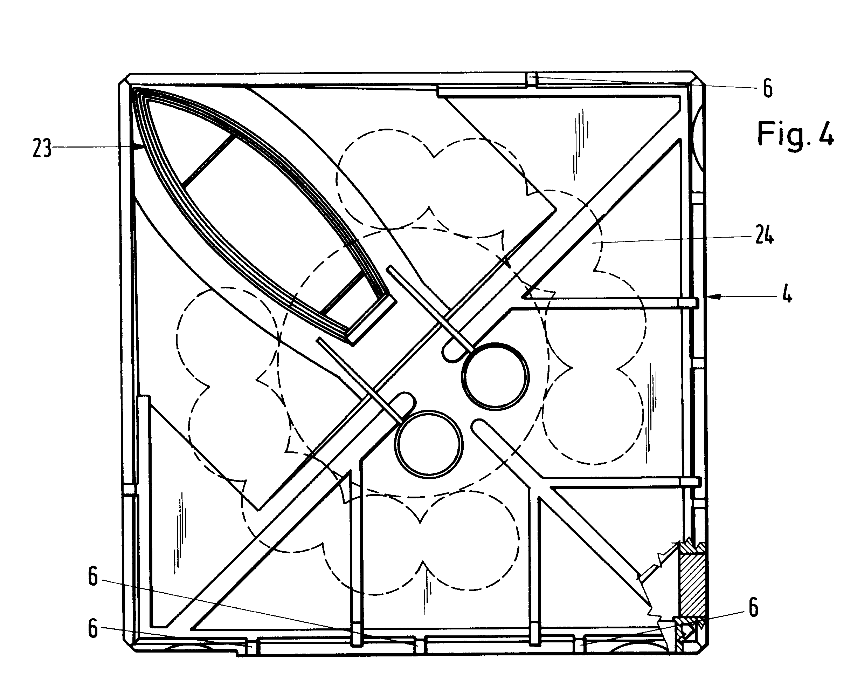

Die Draufsicht der Figur 4 auf den Spritzkern 4 zeigt im oberen Bereich die Ausgießöffnung 23 und am benachbarten Rand oben jeweils ein Abstützteil 6, während längs der beiden unteren Kanten jeweils drei Abstützteile 6 vorgesehen sind. In Figur 4 sind auch die Fließkanäle 24 für den flüssigen Kunststoff beim Spritzvorgang angedeutet. In den Bereichen des Abstützteils 6 ergeben sich kleine Ausnehmungen in dem auf der Innenseite der späteren fertigen Packung angeordneten Kunststoffwulst.

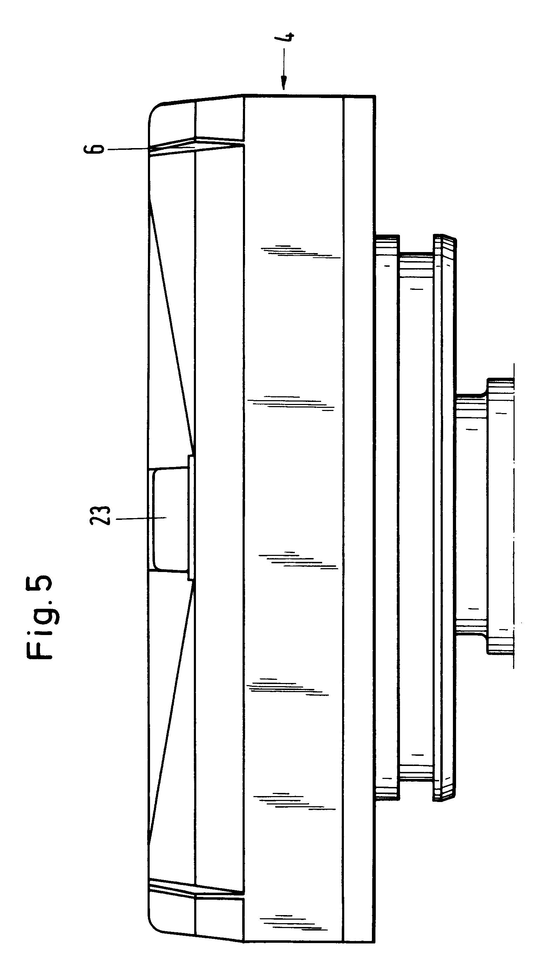

In Figur 5 ist eine Seitenansicht des Kopfes des Spritzkerns gezeigt, wenn man in Figur 4 von oben nach unten blickt, weshalb in der Mitte die Ausgießvorrichtung 23 erkennbar ist. Im Abstand rechts und links von dieser erkennt man zwei Abstützteile 6, die bei dieser Darstellung perspektivisch erscheinen.

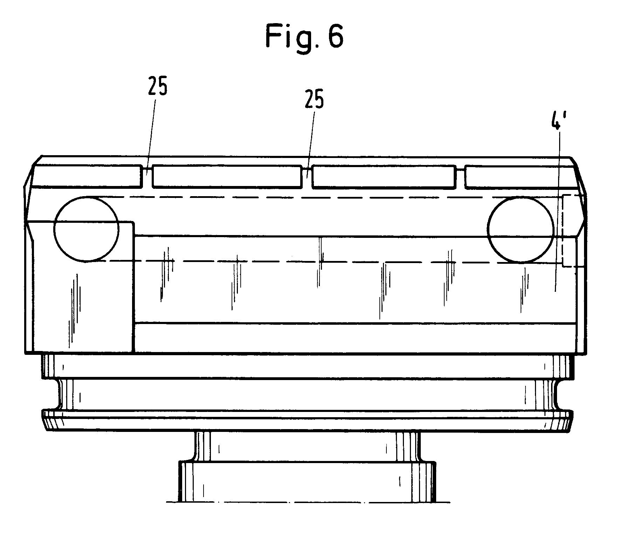

In Figur 6 schließlich ist für eine andere Ausführungsform der Kopf eines Spritzkerns 4′ gezeigt, bei welchem oben an der Kante drei Ausnehmungen 25 in Nutenform eingebracht sind, wo später Abstützteile eingelegt und befestigt werden.

Auf Seite 11 der Beschreibung oben ist bereits erwähnt, daß das Abstützteil auch angeformt oder aufgeschweißt sein kann. Es sei hier nochmals betont, daß eine echte bevorzugte Alternative das Anformen bzw. Ausarbeiten aus einem Stück ist. Durch spanabhebende Bearbeitung können dann die Randfläche 10 bzw. die obere Teilebene 12 und die untere Teilebene 13 so herausgearbeitet werden, daß das Abstützteil 6 stehenbleibt.

Bei der einen vorstehend beschriebenen bevorzugten Ausführungsform geht man von einem Abstützteil 6 in Form eines Plättchens aus, wie in Figur 3 gezeigt ist, weshalb in Figur 1 dieses plattenförmige Abstützteil 6 als mehr oder weniger in den Spritzkern 4 eingelassen gezeichnet ist.

Bei der ebenfalls vorteilhaften Ausführungsform, bei welcher an ein Ausarbeiten von einem Stück gedacht ist, versteht es sich, daß es keine Plättchenform gibt, wie in Figur 3 dargestellt ist, und daß dann sowohl die gestrichelte als auch die strichpunktierte Linie in Figur 1 neben dem Abstützteil 6 entfallen, wobei dann die die Außenkante 11 darstellende Linie durchgezogen gezeichnet sein muß.

## Patentansprüche

1. Vorrichtung zum Anspritzen eines Kunststoffteiles (16) an einen mit Kunststoff beschichteten Papiertubus (1) einer Flüssigkeitspackung, mit einem Spritzkern (4) und einer diesen umgreifenden Außenform (5), wobei an der Randfläche (10) neben einer geraden Außenkante (11) des Spritzkerns (4) ein Abstützteil (6) herausstehend angebracht ist, an welchem der Papiertubusrand (1,2) in Anlage bringbar ist, **dadurch gekennzeichnet,** daß
a) eine Mehrzahl von über den Umfang verteilten Abstützteilen (6) an der oberen Endkante des Spritzkerns (4) angebracht ist,
b) daß das freie Ende des Papiertubusrandes (1,2) über seitliche Abstützflächen des Spritzkerns (4) und der Außenform (5) hinaus nach oben derart weit in den Spritzhohlraum hineinragt, daß das Ende des Papiertubusrandes (1,2) nach innen und außen frei steht und
c) daß der Spritzhohlraum zum Anspritzen eines geschlossenen Kunststoffdeckels (16) an den Papiertubusrand (1, 2), diesen mit Kantenschutz beidseitig umschließend, ausgestaltet ist.

2. Vorrichtung nach Anspruch 1, dadurch gekennzeichnet, daß das Abstützteil (6) die Gestalt eines Plättchens hat, welches einen Teil (6') des Querschnittsprofils zwischen Spritzkern (4) und Außenform (5) einnimmt, und daß die äußere Endfläche (17) des Abstützteils (6) eben ist und parallel zur Tubuswandung (1) derart liegt, daß sie (17) an den ebenen Rand (2) des Papiertubus (1) anlegbar ist.

3. Vorrichtung nach Anspruch 1 oder 2, dadurch gekennzeichnet, daß die äußere ebene Endfläche (17) des Abstützteils (6) in die Außenebene (7) des im Querschnitt viereckigen Spritzkerns (4) mündet und bündig zu dieser (7) liegt und in Richtung der geraden Außenkante (11) eine Länge (1) von 1/90 bis 1/20, vorzugsweise 1/70 bis 1/40 der Länge (L) der Außenkante (11) hat.

4. Vorrichtung nach einem der Ansprüche 1 bis 3, dadurch gekennzeichnet, daß die äußere ebene Endfläche (17) des Abstützteils (6) rechteckig ist und eine Höhe (h) hat, die etwa gleich dem Abstand (A) der geraden Außenkante (11) des Spritzkerns (4) von der ersten Schulter (15) der Außenform (5) ist.

5. Vorrichtung nach einem der Ansprüche 1 bis 4, dadurch gekennzeichnet, daß die jede der vier Außenebenen (7) des Spritzkerns (4) mit seiner Stirnfläche (8) verbindende Randfläche (10) aus wenigstens zwei Teilebenen (12, 13) gebildet ist, die sich längs einer Mittelkante (14) schneiden, und daß das Abstützteil (6) wenigstens an der unteren, zwischen Mittelkante (14) und oberer Außenkante (11) liegenden Teilebene (13) befestigt ist.

## Claims

1. A device for injection moulding a plastics portion (16) on a paper tube (1), which is coated with plastics material, of a fluid pack, comprising an injection moulding core (4) and an outer mould (5) embracing same, wherein disposed in projecting relationship at the edge surface (10) beside a straight outside edge (11) of the injection moulding core (4) is a support portion (6) against which the paper tube edge (1, 2) can be brought to bear, characterised in that
a) a plurality of support portions (6) which are distributed around the periphery is disposed at the upper end edge of the injection moulding core (4),
b) the free end of the paper tube edge (1, 2) projects upwardly beyond lateral support surfaces of the injection moulding core (4) and the outer mould (5) into the injection moulding cavity to such a distance that the end of the paper tube edge (1, 2) is free inwardly and outwardly, and
c) the injection moulding cavity is designed for the injection moulding of a closed plastics cover (16) to the paper tube edge (1, 2), enclosing same with edge protection on both sides.

2. A device according to claim 1 characterised in that the support portion (6) is in the form of a small plate member which occupies a part (6') of the cross-sectional profile between the injection moulding core (4) and the outer mould (5) and that the outer end surface (17) of the support portion (6) is flat and is disposed parallel to the tube wall (1) in such a way that it (17) can be applied against the flat edge (2) of the paper tube (1).

3. A device according to claim 1 or claim 2 characterised in that the outer flat end surface (17) of the support portion (6) opens into the outside plane (7) of the injection moulding core (4) which is of quadrangular cross-section and lies flush with said plane (7) and in the direction of the straight outside edge (11) is of a length (1) of 1/90th to 1/20th, preferably from 1/70th to 1/40th of the length (L) of the outside edge (11).

4. A device according to one of claims 1 to 3 characterised in that the outer flat end surface (17) of the support portion (6) is rectangular and is of a height (h) which is approximately equal to the spacing (A) of the straight outside edge (11) of the injection moulding core (4) from the first shoulder (15) of the outer mould (5).

5. A device according to one of claims 1 to 4 characterised in that the edge surface (10) which connects each of the four outside planes (7) of the injection moulding core (4) to its end surface (8) is formed from at least two plane portions (12, 13) which intersect along a central edge (14) and that the support portion (6) is fixed at least to the lower plane portion (13) which is between the central edge (14) and the upper outside edge (11).

## Revendications

1. Dispositif pour rapporter par injection une pièce plastique (16) contre un tube de papier (1), revêtu de plastique, d'un emballage pour liquides, comportant un noyau d'injection (4) et un moule extérieur (5) entourant ce dernier, une pièce d'appui (6) étant rapportée en saillie contre le bord marginal (10) à côté d'une arête extérieure rectiligne (11) du noyau d'injection (4), pièce d'appui contre laquelle peut venir s'appuyer le bord du tube de papier (1, 2), caractérisé en ce que
a) plusieurs pièces d'appui (6), réparties sur la périphérie, sont rapportées à l'arête supérieure en bout du noyau d'injection (4),
b) l'extrémité libre du bord du tube de papier (1, 2) pénètre vers le haut, dans la cavité d'injection, audelà des faces latérales d'appui du noyau d'injection (4) et du moule extérieur (5), jusqu'à ce que l'extrémité du bord du tube de papier (1, 2) soit dégagée vers l'intérieur et vers l'extérieur, et,
c) la cavité d'injection est conçue de façon à injecter un couvercle plastique fermé (16) contre le bord du tube de papier (1, 2), en entourant ce dernier sur ses deux côtés avec protection des arêtes.

2. Dispositif selon la revendication 1, caractérisé en ce que la pièce d'appui (6) a la forme d'une plaquette qui occupe une partie (6') du profil en section transversale entre le noyau d'injection (4) et le moule extérieur (5), et que la face extérieure en bout (17) de la pièce d'appui (6) est plane et parallèle à la paroi du tube (1), de façon que cette face (17) puisse être rapportée au bord plan (2) du tube de papier (1).

3. Dispositif selon la revendication 1 ou 2, caractérisé en ce que la face plane extérieure en bout (17) de la pièce d'appui (6) débouche dans le plan extérieur (7) du noyau d'injection (4) à section transversale quadrangulaire et est en affleurement avec ce plan extérieur (7), et, dans la direction de l'arête extérieure rectiligne (11), a une longueur (1) de 1/90 à 1/20 et de préférence de 1/70 à 1/40 de la longueur (L) de l'arête extérieure (11).

4. Dispositif selon l'une des revendications 1 à 3, caractérisé en ce que la face plane extérieure en bout (17) de la pièce d'appui (6) est rectangulaire et a une hauteur (h) approximativement égale à la distance (A) entre l'arête extérieure rectiligne (11) du noyau d'injection (4) et le premier épaulement (15) du moule extérieur (5).

5. Dispositif selon l'une des revendications 1 à 4, caractérisé en ce que la face marginale (10) qui relie chacun des quatre plans extérieurs (7) du noyau d'injection (4) à sa face frontale (8) est constituée d'au moins deux plans partiels (12, 13), qui se coupent le long d'une arête centrale (14), et que la pièce d'appui (6) est fixée au moins au plan partiel inférieur (13), situé entre l'arête centrale (14) et l'arête extérieure supérieure (11).
